# EUROPEAN PATENT APPLICATION

(11) **EP 2 497 971 A2**
(43) Date of publication of application: **12.09.2012**
(21) Application number: 12150554.9
(22) Date of filing: 10.01.2012
(51) Int. Cl.: F16F 15/126

(54) **Lightweight damper pulley**

(30) Priority: 09.03.2011 KR 20110020753
(71) Applicant: Fukoku Korea Co., Ltd., Ansan-si, Gyeonggi-do 425-839 (KR)
(72) Inventor: Shin, Seung Woo, 425-839 Gyeonggi-do (KR)
(74) Representative: Raimondi, Adriana

(57) **Abstract**

The invention is a damper pulley which comprises of a cylindrical hub 12 being made of cast iron and coupled to the crankshaft of the engine, a hub plate 16 being made of steel plate and having a central hole 22 on which the hub 12 is attached and a rim 24 at the periphery of it, a rubber layer 18 being attached on the rim 24 of the hub plate 16, and a pulley attached on the outer surface of the rubber layer 18.

## Description

### BACKGROUND OF THE INVENTION

### FIELD OF THE INVENTION

The invention relates to a damper pulley, and more particularly to a lightweight damper pulley to be mounted on the crankshaft of engine and to be manufactured easily with required rigidity and durability.

### DESCRIPTION OF THE RELATED ART

In general, as a periodical torque acts on the crankshaft of the vehicle engine, a torsional vibration may be generated. The larger the rotating force of crankshaft is, the more the torsional vibration is, and the longer the length of the crankshaft is or the smaller the rigidity of the crankshaft is, the more the torsional vibration is. If the rotation speed of the crankshaft reaches to a certain point, then the torsional vibration may resonate with the proper vibration of the crankshaft itself to incur a serious vibration, which results in a bad ride feeling and damages of the timing gear or crankshaft.

In order to reduce the torsional vibration of the crankshaft, a damper pulley is mounted at the front end of the crankshaft. The damper pulley includes a rubber layer along the periphery of the hub and a pulley is mounted on the outer surface of the rubber layer, so that it could reduce the periodic torsional vibration caused by the eccentric rotation of the crankshaft, and drive the components such as a water pump or an alternator which are connected by belts hung on the pulley.

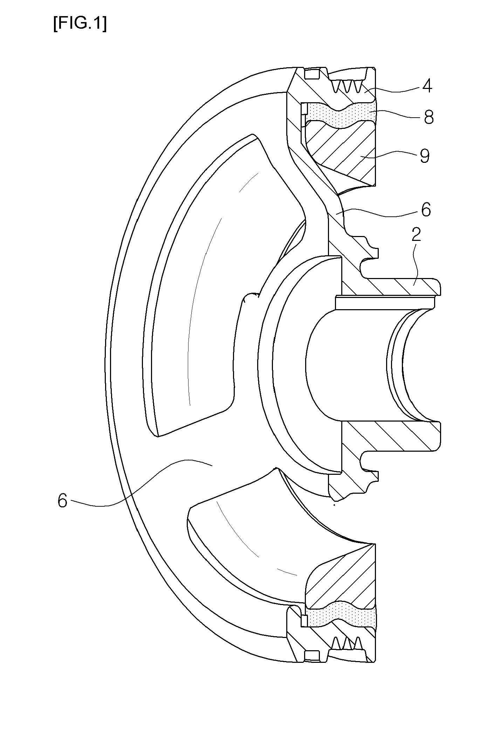

Fig. 1 is a sectional perspective showing the conventional structure of a damper pulley. It comprises of a hub 2 coupled with a crankshaft, a pulley 4 and a spoke 6 extending radially between them. A rubber layer 8 is disposed underneath the pulley 4, and a weight 9 is attached under the rubber layer 8 on the opposite side from the pulley 4. The hub 2, the pulley 4 and the spoke 6 of the conventional damper pulley are made of cast iron integrally so as to have sufficient strength and durability, and the weight 9 is attached to the pulley 4 through the elastic rubber layer 8 to implement the damping action against vibration.

According to the tendency of demanding for weight reduction of car, the light weight engine and damper pulley is also demanded. But the conventional cast iron damper pulley, though having sufficient strength and durability, has a problem of heavy weight. If we make the depth of the spoke 6 thinner in order to reduce the weight, the foaming formed on the surface the cast iron product causes the reduced effective section area, which results in the insufficient strength. Therefore, making of thin spoke could not be satisfactory solution.

Meanwhile, for the purpose of reducing the weight of damper pulley, a plastic hub and a steel hub of the damper pulley have been introduced. But these types of damper pulley do not have sufficient strength or durability to accommodate the severe vibration or torque. And in order to compensate the insufficient strength and durability, a rather complicated reinforcing elements should be added, which will result in the complicated structure, cumbersome manufacturing process and increased cost.

### SUMMARY OF THE INVENTION

The present invention is made to solve the above problem about the demand of reducing car weight and damper pulley, and the object of the invention is to provide a new lightweight damper pulley to be mountable on the crankshaft of engine and to be manufactured easily with desirable rigidity and durability.

To achieve the above object, there is provided a damper pulley which comprises of a cylindrical hub 12 being made of cast iron and coupled to the crankshaft of the engine, a hub plate 16 being made of steel plate and having a central hole 22 on which the hub 12 is attached and a rim 24 at the periphery of it, a rubber layer 18 being attached on the rim 24 of the hub plate 16, and a pulley attached on the outer surface of the rubber layer 18.

Preferably but not necessarily, the hub 12 is made of a ductile cast iron, and the hub plate 16 is formed with a cold rolled steel plate and welded to the hub 12 by brazing.

Preferably but not necessarily, the hub 12 includes a flange 26 extending outward at the attaching portion with the hub plate 16, and a step 28 projecting outward from the base of the flange 26, and the central hole 22 of the hub plate 16 being inserted on the step 28 while the hub plate 16 tightly contacting the flange 26, and the hub plate 16being welded by brazing with the hub 12 at the end of the flange 26.

### BRIEF DESCRIPTION OF THE DRAWINGS

FIG. 1 is a sectioned perspective of the conventional damper pulley.
FIG. 2 is a section of the embodiment of the invention.
FIG. 3 is a perspective of the embodiment viewed from one side
FIG. 4 is a perspective of the embodiment viewed from the other side.

### DETAILED DESCRIPTION OF THE INVENTION

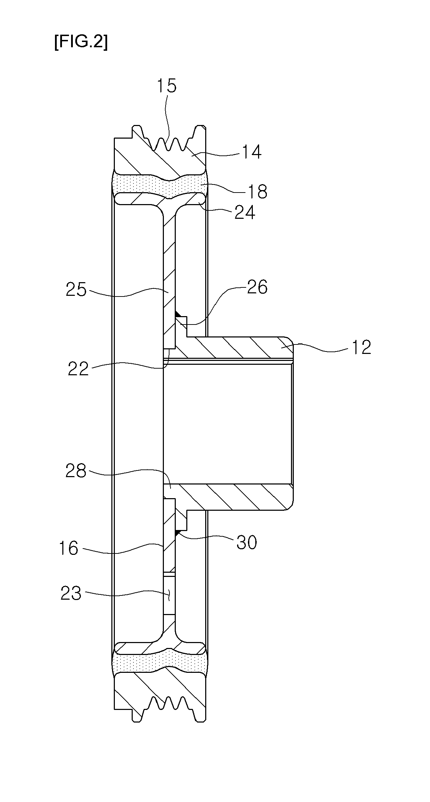

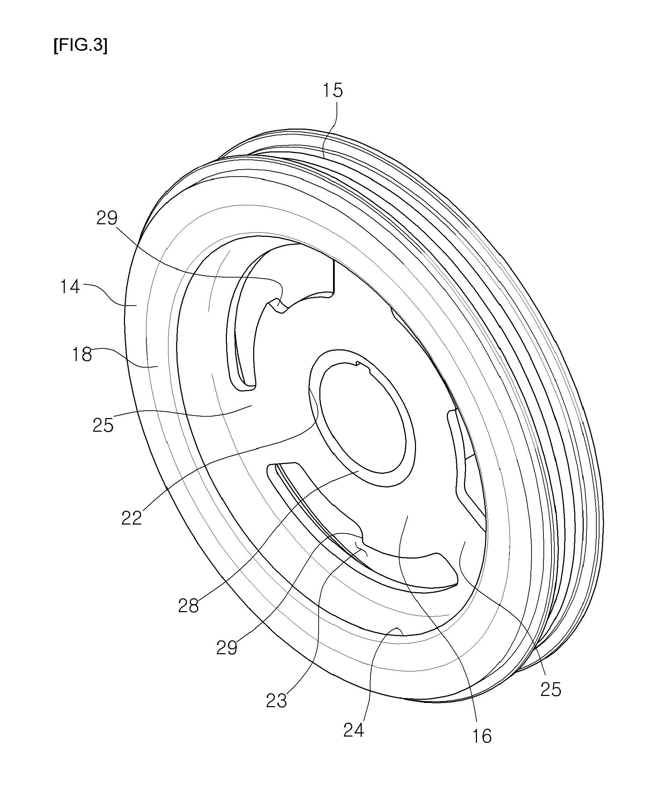

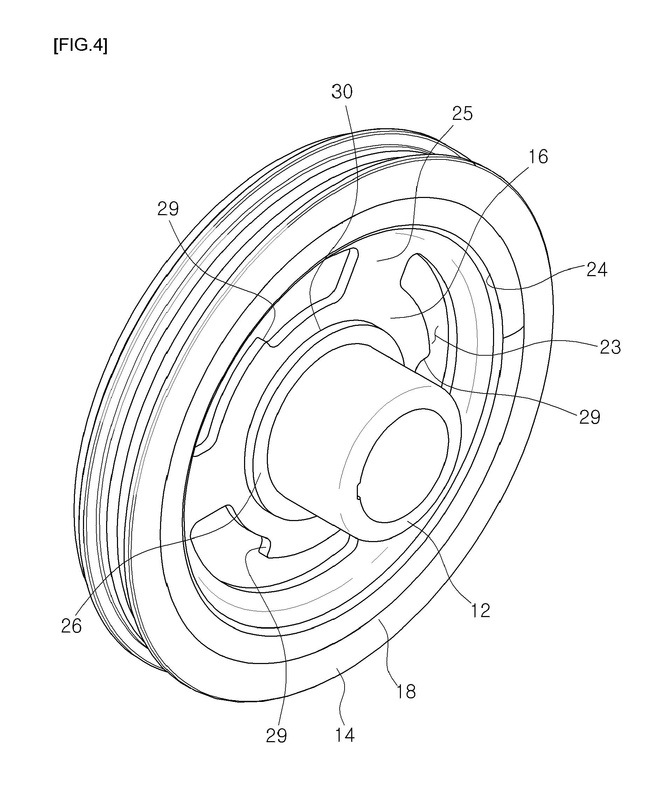

Referring to FIG. 2 to 4, the preferred embodiment of the invention is explained. As shown in Fig. 2 to 4, the invention includes a cylindrical hub 12 being coupled to the crankshaft of engine, a hub plate 16 attached to the periphery of the hub 12 and having a central hole 22 and peripheral rim 24, a rubber layer 18 being attached on the outer surface of the rim 24 of the hub plate 16, and the pulley attached on the outer surface of the rubber layer 18.

The hub 12 of the invention is formed of a cast iron, preferably a ductile cast iron such as PCD450 with high strength, high wear resistance, high anti-corrosion and high impact resistance, and is finished by cutting or grinding. The hub 12 includes an outward flange 26 at the attaching area with the hub plate 16, and a short step 28 is formed at the base of the flange 26.

The hub plate 16 attached to the hub 12 is made of a steel plate, preferably SP steel such as SPCC through the press forming. The hub plate 16 includes a central hole 22 and a rim 24 with T shape. The rim 24 could be formed by repetitive roll forming of the cold rolled steel plate to widen the width of the steel and deform the sectional shape of it progressively. The hub plate 16 has the plural openings 23 outside the central hole 22 and the radial spokes 25 formed between the openings 23. A step 29 is formed at the inner edge of the opening 23. A tool may be engaged with the step 29 to assemble or disassemble the damper pulley against the engine for the purpose of maintenance.

In order to firmly attach the cylindrical hub 12 made of a iron cast hub 12 and the hub plate 16 made of a cold rolled steel plate, both of them is welded by use of the brazing method. To do this, the projecting step 28 of the hub 12 is forcedly fitted into the central hole 22 of the hub plate 16, and a filler metal such as ring shape brass is inserted at the contact portion between the flange 26 of the hub 12 and the hub plate 16, and heating them at the temperature above 1000°C, then the filler metal is melted into the gap between the hub 12 and the hub plate 16 to achieve firm and integral attachment.

The rubber layer 16 of ring shape is attached on the outer surface of the rim 24 at the periphery of the hub plate 15 to implement the damping action. The pulley 14 is attached at the outer surface of the rubber layer 18 to function as a weight for the damping action and the timing belts are hung on the pulley. Preferably the pulley is formed of cast iron and finished to have the grooves in which the belts are hung.

According to the invention, the damper pulley 12 coupled to the crankshaft of the engine is made of a cast iron with high strength and durability, preferably the ductile cast iron with high wear resistance and high impact resistance, and the hub plate 16 attached to the hub 12 is made of a steel plate with relatively lighter than the cast iron and with easy forming property, and the different two materials are welded firmly by the brazing method, to meet the demand of the weight reduction of car and show the sufficient strength and durability against the periodically variable severe torque load, and achieve high wear resistance and impact resistance, as a result, to implement an excellent damping action of the damper pulley.

## Claims

1. A damper pulley which comprises of a cylindrical hub 12 being made of cast iron and coupled to the crankshaft of the engine, a hub plate 16 being made of steel plate and having a central hole 22 on which the hub 12 is attached and a rim 24 at the periphery of it, a rubber layer 18 being attached on the rim 24 of the hub plate 16, and a pulley attached on the outer surface of the rubber layer 18.

2. A damper pulley of claim 1, wherein the hub 12 is made of a ductile cast iron, and the hub plate 16 is formed with a cold rolled steel plate and welded to the hub 12 by brazing.

3. A damper pulley of claim 1 or 2, wherein, the hub 12 includes a flange 26 extending outward at the attaching portion with the hub plate 16, and a step 28 projecting outward from the base of the flange 26, and the central hole 22 of the hub plate 16 being inserted on the step 28 while the hub plate 16 tightly contacting the flange 26, and the hub plate 16being welded by brazing with the hub 12 at the end of the flange 26.
